# EUROPEAN PATENT APPLICATION

(11) **EP 3 232 676 A1**
(43) Date of publication of application: **18.10.2017**
(21) Application number: 15867670.0
(22) Date of filing: 19.10.2015
(51) Int. Cl.: H04N 21/43, H04N 21/435

(54) **SUBTITLE SWITCHING METHOD AND DEVICE**

(30) Priority: 12.12.2014 CN 201410767841
(71) Applicant: Shenzhen Tcl Digital Technology Ltd., Shenzhen City, Guangdong 518000 (CN)
(72) Inventor: JIANG, Zhongyang, No.1 Liyumen Street 1 Qianwan Road Shenzhen Guangdong 51800 (CN); ZHOU, Wenjie, No.1 Liyumen Street 1 Qianwan Road Shenzhen Guangdong 51800 (CN); WANG, Tiantian, No.1 Liyumen Street 1 Qianwan Road Shenzhen Guangdong 51800 (CN)
(74) Representative: Kuhnen & Wacker
(86) International application number: PCT/CN2015/092210
(87) International publication number: WO 2016/091011

(57) **Abstract**

Disclosed are a subtitle switching method and device, the method comprising the following steps: receiving a subtitle switching instruction input by a user; acquiring to-be-switched subtitle data corresponding to the subtitle switching instruction and stored in a corresponding preset buffer area and a present time stamp of video and audio data currently being played; and outputting and displaying subtitle data of the to-be-switched subtitle data having a time stamp matching the present time stamp. When playing a video and audio file, the present invention caches subtitles in all languages, removes stored data of language subtitle data not currently being played and having a time stamp earlier than that of the video and audio data currently being played in a buffer area, and outputs and displays data of the to-be-switched subtitle data having a time stamp matching that of the video and audio data currently being played, such that the content of a data frame of the switched subtitle data matches that of a data frame currently being played, thus enabling smoother subtitle switching with no lag time.

## Description

### FIELD OF THE INVENTION

The present invention relates to a field of Internet TV, especially to a subtitle switching method and device.

### BACKGROUND OF THE INVENTION

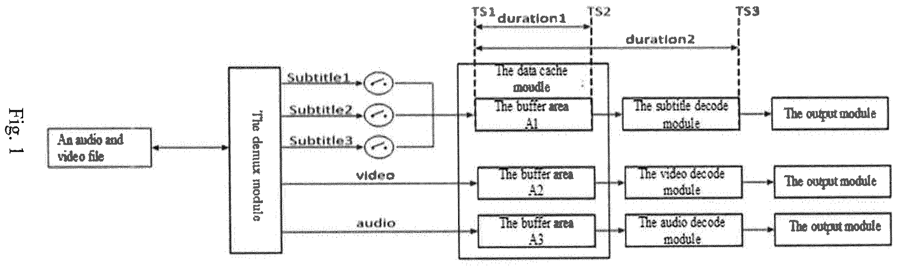

In many countries and areas, especially for some European video content providers, in order to provide video-on-demand programme services to people in variety of languages, the subtitles in variety of languages are embedded in the video files of the video programmes. When people are watching these programmes, using a remote controller may realize to switch the subtitles in variety of languages, for example, when watching Chinese blockbusters, many programmes may simultaneously provide Chinese and English subtitles. As shown in Fig.1, in general, the procedure of switching subtitles as follows:
Currently playing the subtitle 1 in language A, when the users switches the subtitle 2 in language B:
Firstly, stop sending data of subtitle 1 into a cache A1, removing the cache A1, and flushing the subtitle decode module to remove data cached in the subtitle decode module;
Then, sending data of subtitle 2 into a cache A1, the data cache module sends the data in the cache A1 into the data cache module;
Later, after the data cache module receives the data of subtitle 2, decoding the data of subtitle 2, synchronizing the decoded data of subtitle and audio or video data at time which then are outputted to the output module.

Finally, after receiving the decoded subtitle data, the output module outputs the decoded subtitle data, then switching subtitles is closed.

According to the abovementioned procedure, when switching subtitles, after clearing up the data of subtitle 1 in the cache A1 and the data cache module, inserting the data of subtitle 2 at time TS1. Therefore, compared with audio or video files, the abovementioned procedure lacks the data in time length of TS1 subducting TS3, where TS3 represents the time of the present time stamp. Therefore, during the process of switching subtitles, people need to wait for the time length of TS1 subducting TS3 to see switched subtitles, meanwhile, since the time length of the subtitles does not match that of the audio and video files, sometimes it will appear lag phenomenon when outputting the subtitles, audio and video synchronously.

### SUMMARY OF THE INVENTION

The present invention discloses a subtitle switching method and device, to solve a technology problem that the conventional subtitle switching method needs to wait for a period of time causing the display screen in lag phenomenon.

In order to realize the abovementioned aim, the present invention provides a subtitle switching method which includes:
receiving an instruction for switching subtitles inputted by users;
obtaining subtitle data corresponding to the instruction and stored in a preset buffer area, and a present time stamp of audio and video data currently played;
outputting and displaying the subtitle data of to-be-switched subtitle data when a time stamp matching the present time stamp currently played.

Preferably, before receiving the instruction for switching subtitles inputted by users, the subtitle switching method further includes:
demultiplexing audio and video files to obtain the audio and video data, and arrays of subtitle data corresponding to the audio and video data;
storing the audio and video data, and the arrays of subtitle data into a corresponding preset buffer area;
decoding the audio and video data, and subtitle data in present language of the arrays of subtitle data;
outputting and displaying the decoded audio and video data, and the decoded present language data synchronously.

Preferably, after receiving the instruction for switching subtitles inputted by users, the subtitle switching method further includes: determining whether to-be-switched subtitle data is the subtitle data in present language;
if yes, continue outputting the present language subtitle data;
if no, obtain the to-be-switched subtitle data and stored in the preset buffer area, and obtain a present time stamp of the audio and video data currently played.

Preferably, after obtaining the to-be-switched subtitle data, stored in the preset buffer area and obtaining the present time stamp of the audio and video data currently played includes: removing subtitle data of the to-be-switched subtitle data having the time stamp earlier than the present time stamp currently played.

Preferably, before outputting and displaying the subtitle data of the to-be-switched subtitle data having the time stamp matching the present time stamp currently played, the method further includes: decoding the subtitle data of the to-be-switched subtitle data having the time stamp matching the present time stamp currently played.

Furthermore, in order to realize the above aims, the present invention further discloses a subtitle switching device including:
a receiving module, configured for receiving an instruction inputted by users;
an obtaining module, configured for obtaining the to-be-switched subtitle data, corresponding to the instruction, stored in the corresponding preset buffer area and the present time stamp of the audio and video data currently played;
an output module, for outputting and displaying subtitle data of the to-be-switched subtitle data having a time stamp matching the present time stamp currently played.

In addition, in order to realize the above aims, the present invention discloses a subtitle switching device including:
a receiving module, for receiving an instruction for switch inputted by users;
an obtaining module, for receiving to-be-switched subtitle data and stored in a preset buffer area, and a present time stamp of the audio and video data currently played;
an output module, for outputting and displaying subtitle data when a time stamp matching the present time stamp currently played.

Preferably, the subtitle switching device further includes:
a demux module, for demultiplexing the audio and video file to obtain the audio and video data and arrays of subtitle data corresponding the audio and video data;
a data cache module, for caching the audio and video data and arrays of subtitle data into a corresponding buffer area;
a decode module, for decoding the audio and video data and present language data in the arrays of subtitle data; and
the output module is configured for outputting and displaying the decoded audio and video data and the decoded present language data synchronously.

Preferably, the subtitle switching device further includes: a determination module, for determining whether the to-be-switched subtitle data is the present language subtitle currently played; and the output module is configured for outputting the present subtitle data currently played.

Preferably, the subtitle switching device further includes: a remove module, for removing the subtitle data of to-be-switched subtitle data having the time stamp earlier than the present time stamp.

Preferably, according to the subtitle switching device, the decode module is configured for decoding the subtitle data of to-be-switched subtitle data having the time stamp matching the present time stamp currently played.

The method and subtitle switching device of the present invention, when the audio and video files are currently played, caching the subtitles in a variety of languages, by removing the subtitle data in the buffer area having the time stamp of language subtitle data non-currently played earlier than the time stamp of the audio and video data currently played, and outputting the subtitle data having the time stamp of the subtitle data matching the present time stamp currently played, contents of data frame of the subtitle data after switched and contents of data frame in current display can be well-matched, switching subtitles will be comparative smooth without lag phenomenon.

### BRIEF DESCRIPTION OF THE DRAWINGS

Fig. 1 is a schematic diagram of principle of a conventional subtitle switching method;
Fig. 2 is a schematic diagram of principle of a subtitle switching method according to the present invention;
Fig. 3 is a flowchart of the subtitle switching method according the first embodiment of the present invention;
Fig. 4 is a flowchart of the subtitle switching method according to the second embodiment of the present invention;
Fig. 5 is a flowchart of the subtitle switching method according to the third embodiment of the present invention;
Fig. 6 is a flowchart of the subtitle switching method according to the fourth embodiment of the present invention;
Fig. 7 is a flowchart of the subtitle switching method according to fifth embodiment of the present invention;
Fig.8 is a structural diagram of a subtitle switching device according to the first embodiment of the present invention;
Fig. 9 is a structural diagram of the subtitle switching device according to the second embodiment of the present invention;
Fig. 10 is a structural diagram of the subtitle switching device according to the third embodiment of the present invention;
Fig. 11 is a structural diagram of the subtitle switching device according to the fourth embodiment of the present invention;

Objective achieving, function features, and advantages of the present invention are further described with reference to the embodiments and the accompany drawings.

### DETAILED DESCRIPTION OF THE EMBODIMENTS

It should be understood that the specific embodiments described herein are merely used for describing the present invention, but are not intended to limit the present invention.

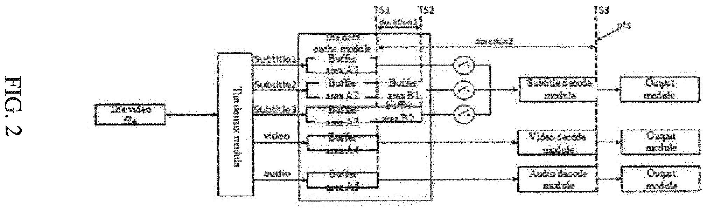

In order to solve the problem that switching multiple subtitles needs to wait for a period of time to cause the display screen in lag phenomenon, as shown in Fig. 2, demultiplexing the audio and video file, and then caching the subtitles in variety of languages. In order to realize switching subtitles relatively smoothly and quickly, and the switched subtitles and the presently displayed video are well-matched.

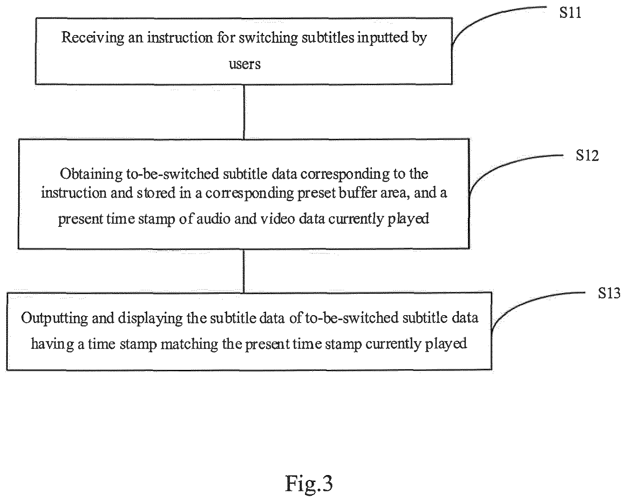

Based on above principle, the present invention discloses a subtitle switching method, with reference to Fig. 3, in an embodiment, the subtitle switching method includes the following steps:
Step S 11: receiving an instruction inputted by users.

When a user is watching audio and video files, the subtitles displayed by default are not wanted, the user can switch the subtitles by a remote controller. Specifically, choosing a function of switching subtitles, and choosing a demanding subtitle type in the optional list to generate an instruction of switching subtitles. Once detecting the instruction of switching subtitles, receiving it.

Step S12, obtaining the to-be-switched subtitle data, corresponding to the instruction, stored in the corresponding preset buffer area and the present time stamp of the audio and video data currently played;

According to the instruction for switching subtitles, obtaining to-be-switched subtitle data corresponding to the instruction, then the to-be-switched subtitle data are stored in the corresponding buffer, and each subtitle data has a corresponding preset buffer area, that means, different subtitle data may be stored in different preset buffer areas. Meanwhile, obtaining the preset time stamp of the audio and video data currently played, that means, obtaining the present time stamp of the data frame in the obtained audio and video data currently played.

Step S 13: outputting and displaying subtitle data of the to-be-switched subtitle data having the time stamp matching the present time stamp.

Outputting and displaying subtitle data of the to-be-switched subtitle data having the time stamp matching the present time stamp can allow the to-be-switched subtitle data and the video data in present display to be well-matched.

The subtitle switching method according to the embodiments of the present invention, when the audio and video files are currently played, caching the subtitles in a variety of languages, by removing the subtitle data in the buffer area having the time stamp of language subtitle data non-currently played earlier than that of the audio and video data currently played, outputting and displaying the subtitle data having the time stamp of the subtitle data matching the present time stamp currently played, so as to allow contents of data frame of the subtitle data after switched and contents of data frame currently played to be well-matched, switching subtitles will be comparative smooth without lag phenomenon.

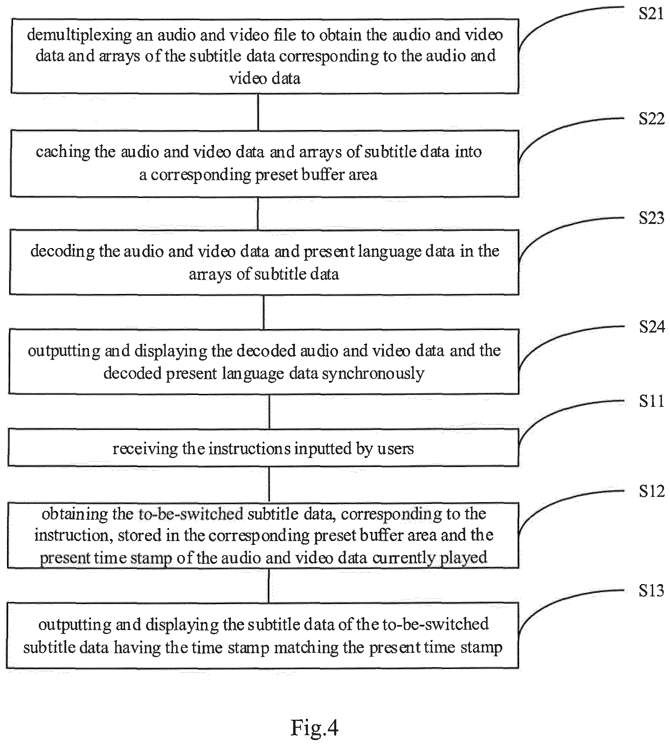

Furthermore, with reference to Fig. 4, Fig. 4 is a flowchart of the subtitle switching method according to the second embodiment of the present invention.

According to the above embodiments, before receiving the instruction inputted by users further includes:
step S21: demultiplexing the audio and video file to obtain audio and video data, and arrays of subtitle data corresponding the audio and video data;
step S 22: storing the audio and video data and the arrays of subtitle data into a corresponding preset buffer area;
step S23: decoding the audio and video data and subtitle data in present language;
step S24: outputting and displaying the decoded audio and video data and the decoded present language data synchronously.

More specifically, when receiving the instruction of displaying the audio and video file, firstly demultiplexing the audio and video file to separate the arrays of subtitle data, video data out from the audio and video file; then storing the audio and video data into the corresponding preset buffer area, as well as storing arrays of subtitle data into the corresponding buffer area; later, decoding the audio and video files, at the same time decoding the subtitle data in present language, of arrays of subtitle data; at last, outputting and displaying audio and video data synchronously outputting and displaying the subtitle data in present language.

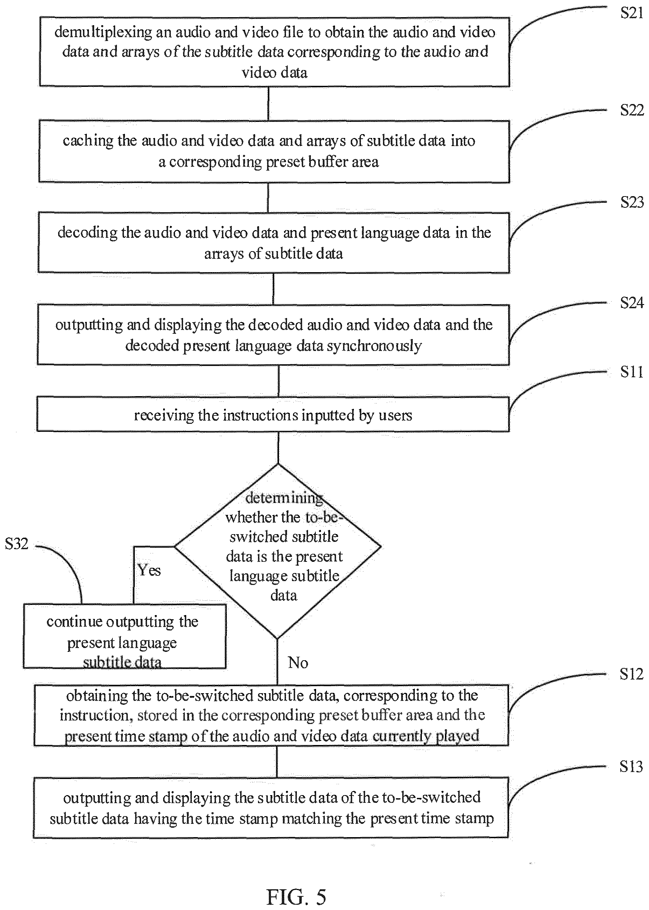

Furthermore, with reference to Fig. 5, Fig. 5 is a flowchart of the subtitle switching method according to the third embodiment of the present invention.

According to the above embodiments, after receiving the instruction inputted by users, the present invention further includes:
step S31: determine whether the to-be-switched subtitle data is the present language data currently played;
if yes, step into the step S32; if no, step into the step S12;
step S32: continue outputting and displaying the present language data currently played;
step S12: obtaining the to-be-switched subtitle data and stored in the preset buffer area, and obtain a present time stamp of the audio and video data currently played.

More specifically, when receiving the instruction for switching subtitles, firstly determine whether the subtitle data is the preset language data currently played, if yes, continue outputting and displaying the present language data currently played, if no, performing step S12 to obtain the to-be-switched subtitle data and stored in the preset buffer area, meanwhile to obtain a present time stamp of the audio and video data currently played.

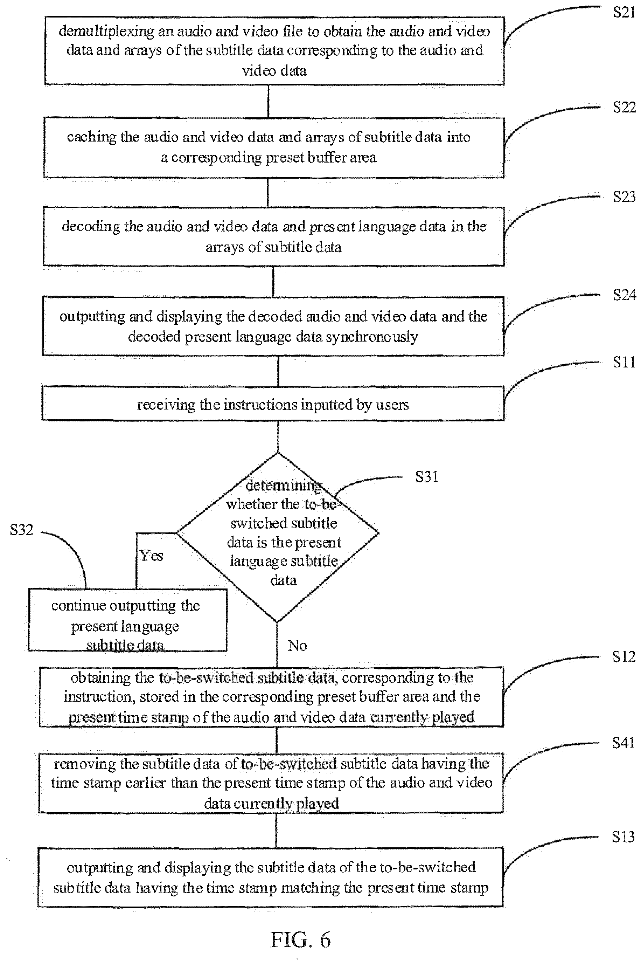

Furthermore, with reference to Fig. 6, Fig. 6 is a flowchart of the subtitle switching method according to the fourth embodiment of the present invention;

According to the above embodiments, after obtaining the to-be-switched subtitle data, corresponding to the instruction, stored in the corresponding preset buffer area and the present time stamps of the audio and video data currently played, the present invention further includes:
step S41, removing the subtitle data of to-be-switched subtitle data having the time stamp earlier than the present time stamp of the audio and video data currently played.

Comparing the time stamps of data frames in other non-currently played language data of the to-be-switched subtitle data and stored in the preset buffer area with the present time stamps of the data frames currently played, the data frames will be released having the time stamps of to-be-switched subtitle data earlier than the present time stamps of the data frames currently played.

According to another embodiment of the present invention, the subtitle switching method further includes the following steps:

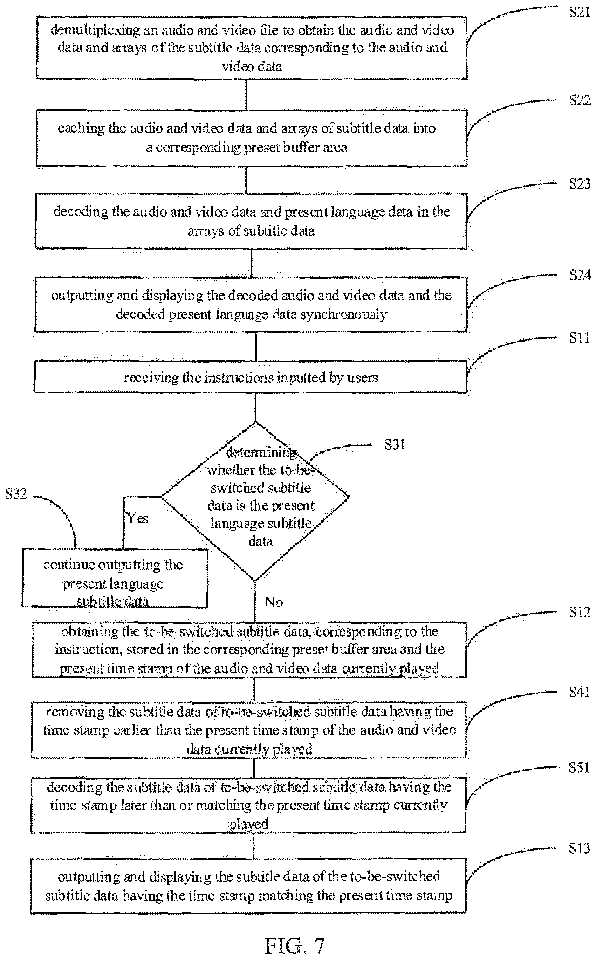

Furthermore, with reference to Fig. 7, Fig. 7 is a flowchart of the subtitle switching method according to fifth embodiment of the present invention.

According to above embodiments, before outputting and displaying the subtitle data of to-be-switched subtitle data having the time stamp matching the present time stamp of the audio and video data currently played, the subtitle switching method further includes:
step S51, decoding the subtitle data of to-be-switched subtitle data having the time stamp later than or matching the present time stamp currently played.

More specifically, before outputting and displaying the subtitle data of to-be-switched subtitle data having the time stamp matching the present time stamp of the audio and video data currently played, decoding the subtitle data of to-be-switched subtitle data having the time stamp matching the present time stamp currently played, to allow the subtitle data being displayed.

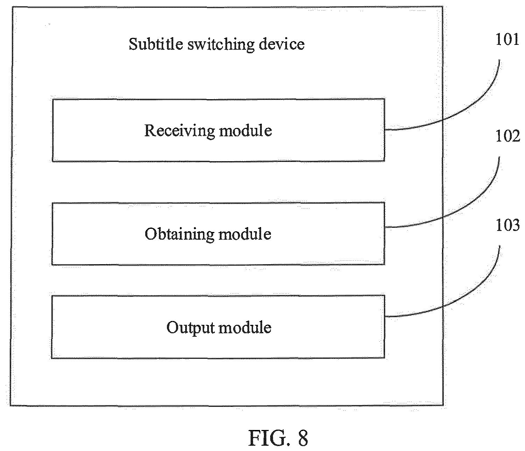

The present invention discloses a subtitle switching device, with reference to Fig. 8, in an embodiment, the device includes:
A receiving module 101 is configured for receiving an instruction for switching subtitles inputted by users;
When users are watching audio and video files, and find the subtitle displayed by default is not wanted, switching subtitles may be realized by a remoter. More specifically, by choosing a function of switching subtitles, and selecting a demanding subtitle type from the popping-up optional list to generate the instruction for switching subtitles, once detecting the instruction for switching subtitles, receiving it;
An obtaining module 102 is configured for receiving the to-be-switched subtitle data and stored in a preset buffer area, and a present time stamp of the audio and video data currently played;
According to the instructions for switching subtitles, obtaining the to-be-switched subtitle data, corresponding to the subtitle type chosen by users, where the to-be-switched subtitle data is stored in a corresponding preset buffer area, and each subtitle data has a corresponding preset buffer area, i.e. different subtitle data is stored in different preset buffer area; meanwhile, obtaining a present time stamp of the audio and video data currently played.

An output module 103 is configured for outputting and displaying subtitle data of the to-be-switched subtitle data having a time stamp matching the present time stamp currently played;
Then subtitle data of the to-be-switched subtitle data having a time stamp matching the present time stamp currently played are outputted and displayed.

The subtitle switching device according to the embodiment of the present invention, when the audio and video files are currently played, caching the subtitles in a variety of languages, by removing the subtitle data in the buffer area having the time stamp of language subtitle data non-currently played earlier than the present time stamp of the audio and video data currently played, and outputting the subtitle data having the time stamp of the subtitle data matching the present time stamp currently played, contents of data frames of the subtitle data after switched and contents of data frames in current display can be well-matched, switching subtitles will be comparative smooth without lag phenomenon.

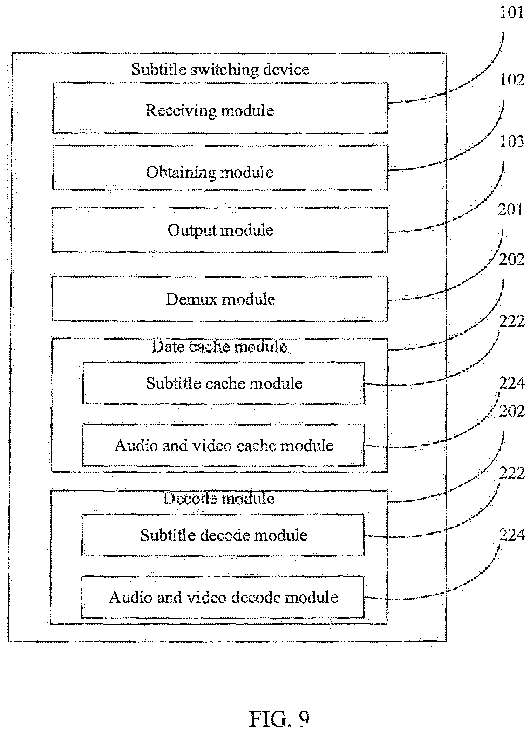

Furthermore, with reference to Fig. 9, Fig. 9 is a structural diagram of the subtitle switching device according to the second embodiment of the present invention;

According to the above embodiments of the present invention, the device further includes:
A demux module 201 is configured for demultiplexing the audio and video file to obtain the audio and video data and arrays of subtitle data corresponding the audio and video data;
A data cache module 202 is configured for caching the audio and video data and arrays of subtitle data into a corresponding buffer; preferably, the data cache module 202 includes several subtitle cache units 222 is configured for storing the arrays of the subtitle data into the corresponding preset buffer area, and an audio and video cache unit 224 is configured for storing the audio and video data into the corresponding preset buffer area.

A decode module 203 is configured for decoding the audio and video data and present language data in the arrays of subtitle data; preferably, the decode module 203 includes a subtitle decode module 232 is configured for decoding the present language data, and an audio and video decode module 234 is configured for decoding the audio and video data;
The output module 103 is configured for outputting and displaying the decoded audio and video data and the decoded present language data synchronously.

More specifically, when receiving the instruction of displaying the audio and video file, firstly demultiplexing the audio and video file to separate the arrays of subtitle data, separating the audio and video data out from the audio and video file; then storing the audio and video data into the corresponding preset buffer area, as well as storing arrays of subtitle data into the corresponding buffer area; later, decoding the audio and video files, at the same time decoding the subtitle data in present language, of arrays of subtitle data; at last, outputting and displaying audio and video data synchronously outputting and displaying the subtitle data in present language.

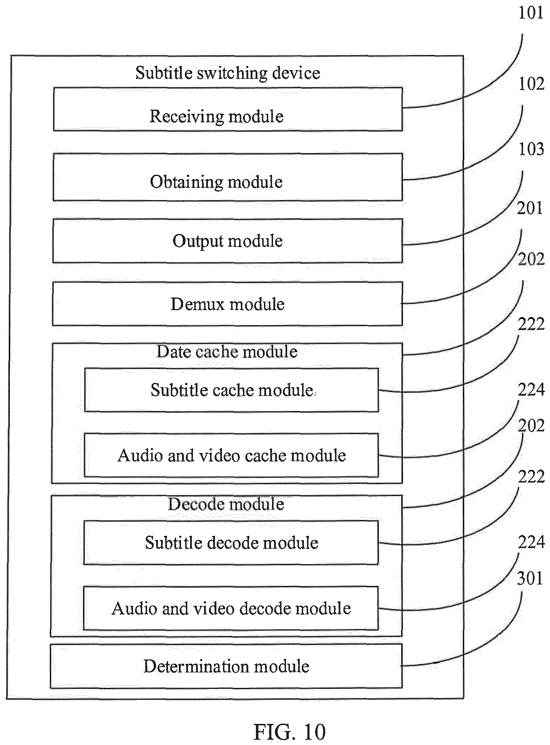

Furthermore, with reference to Fig. 10, Fig. 10 is a structural diagram of the subtitle switching device according to the third embodiment of the present invention;
According to above embodiments of the present invention, the subtitle switching device further includes:
A determination module 301, for determining whether the to-be-switched subtitle data is the present language subtitle currently played; and
The output module 104 is configured for outputting the present subtitle data currently played.

More specifically, when receiving the instruction for switching subtitles, firstly determine whether the subtitle data is the preset language data currently played, if yes, continue outputting and displaying the present language data currently played, if no, obtain the to-be-switched subtitle data and stored in the preset buffer area, meanwhile obtain a present time stamp of the audio and video data currently played.

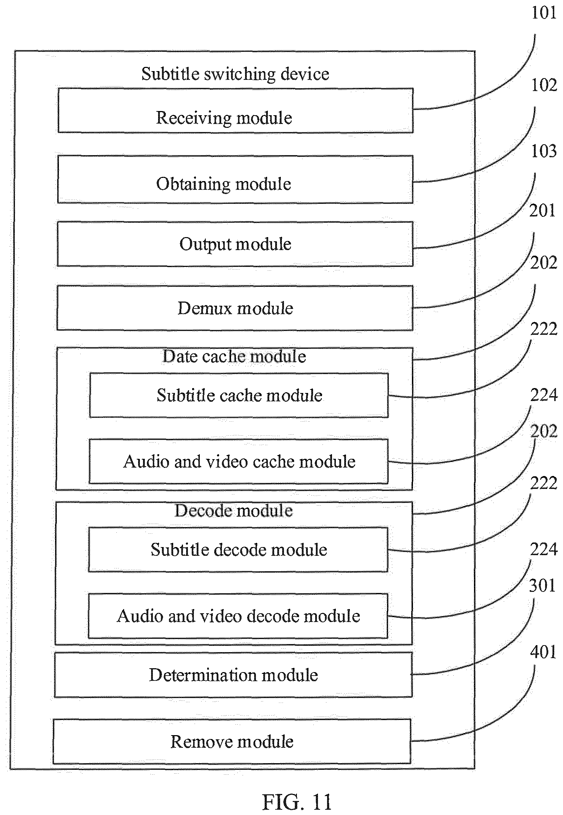

Furthermore, with reference to Fig. 11, Fig. 11 is a structural diagram of the subtitle switching device according to the fourth embodiment of the present invention.

According to above embodiment of the present invention, the subtitle switching device further includes a removing module 404 is configured for removing the subtitle data of the to-be-switched subtitle data having the time stamp earlier than the present time stamp of the audio and video data currently played.

Comparing the time stamps of data frames of the to-be-switched subtitle data, with the present time stamps of the data frames currently played, the data frames will be released having the time stamps of to-be-switched subtitle data earlier than the present time stamps of the data frames currently played.

Furthermore, according to the above embodiments of the present invention, the decode module 203 is also configured for decoding the subtitle data of to-be-switched subtitle data having the time stamp later than or matching the present time stamp currently played.

More specifically, before outputting and displaying the subtitle data of to-be-switched subtitle data having the time stamp matching the present time stamp of the audio and video data currently played, decoding the subtitle data of to-be-switched subtitle data having the time stamp matching the present time stamp currently played, to allow the subtitle data being displayed.

Overall, the subtitle switching method and device according to the embodiments of the present invention, when the audio and video files are currently played, caching the subtitles in a variety of languages, by removing the subtitle data in the buffer area having the time stamp of language subtitle data in non-current display earlier than the present time stamp of the audio and video data currently played, and outputting the subtitle data having the time stamp of the subtitle data matching the present time stamp currently played, contents of data frames of the subtitle data after switched and contents of data frames in current display can be well-matched, switching subtitles will be comparative smooth without lag phenomenon.

The foregoing descriptions are merely embodiments of the present invention, and are not intended to limit the scope of the present invention. An equivalent structural or equivalent process alternation made by using the content of the specification and drawings of the present invention, or an application of the content of the specification and drawings directly or indirectly to another related technical field, shall fall within the protection scope of the present invention.

## Claims

1. A subtitle switching method comprising:
receiving an instruction for switching subtitles inputted by users;
obtaining to-be-switched subtitle data corresponding to the instruction and stored in a corresponding preset buffer area, and a present time stamp of audio and video data currently played;
outputting and displaying the subtitle data of to-be-switched subtitle data having a time stamp matching the present time stamp currently played.

2. The subtitle switching method of claim 1, wherein before receiving the instruction for switching subtitles inputted by users comprising:
demultiplexing an audio and video file to obtain the audio and video data, and arrays of subtitle data corresponding to the audio and video data;
storing the audio and video data, and the arrays of subtitle data into a corresponding preset buffer area;
decoding the audio and video data, and subtitle data in present language of the arrays of subtitle data;
outputting and displaying the decoded audio and video data, and the decoded present language data synchronously.

3. The subtitle switching method of claim 2, wherein, after receiving the instruction for switching subtitles inputted by users comprising:
determining whether the to-be-switched subtitle data is the subtitle data in present language;
if yes, continue outputting the present language subtitle data;
if no, obtain the to-be-switched subtitle data and stored in the preset buffer area, and obtain a present time stamp of the audio and video data currently played.

4. The subtitle switching method of claim 1, wherein, after obtaining the to-be-switched subtitle data, and stored in the corresponding preset buffer area, and obtaining the present time stamp of the audio and video data currently played comprising: removing subtitle data of the to-be-switched subtitle data having the time stamp earlier than the present time stamp currently played.

5. The subtitle switching method of claim 1, wherein before outputting and displaying the subtitle data of the to-be-switched subtitle data having the time stamp matching the present time stamp currently played comprising: decoding the subtitle data of the to-be-switched subtitle data having the time stamp matching the present time stamp currently played.

6. A subtitle switching device comprising:
a receiving module, for receiving an instruction for switching inputted by users;
an obtaining module, for receiving to-be-switched subtitle data and stored in a corresponding preset buffer area, and a present time stamp of the audio and video data currently played;
an output module, for outputting and displaying the subtitle data of to-be-switched subtitle data having a time stamp matching the present time stamp currently played.

7. The subtitle switching device of claim 6, wherein the device further comprises:
a demux module, for demultiplexing an audio and video file to obtain the audio and video data and arrays of subtitle data corresponding the audio and video data;
a data cache module, for caching the audio and video data and arrays of subtitle data into a corresponding buffer area;
a decode module, for decoding the audio and video data and present language data in the arrays of subtitle data; and
the output module, configured for outputting and displaying the decoded audio and video data and the decoded present language data synchronously.

8. The subtitle switching device of claim 7, wherein the device further comprises:
a determination module, for determining the to-be-switched subtitle data is the present language subtitle currently played; and
the output module, also configured for outputting the present subtitle data currently played.

9. The subtitle switching device of claim 6, wherein the device further comprises:
a remove module, for removing the subtitle data of to-be-switched subtitle data having the time stamp earlier than the present time stamp.

10. The subtitle switching device of claim 7, wherein the decode module is configured for decoding the subtitle data of the to-be-switched subtitle data having the time stamp matching the present time stamp currently played.

11. A subtitle switching method comprising following steps:
demultiplexing an audio and video file to obtain audio and video data and arrays of subtitle data corresponding to the audio and video data;
storing the audio and video data and the arrays of subtitle data into a corresponding preset buffer area;
decoding the audio and video data and subtitle data in present language of the arrays of subtitle data;
outputting and displaying the decoded audio and video data and the decoded present language data synchronously;
receiving an instruction of switching subtitles inputted by users;
obtaining to-be-switched subtitle data, corresponding to the instruction, stored in the corresponding preset buffer area and the present time stamp of the audio and video data currently played;
removing subtitle data of the to-be-switched subtitle data having the time stamp earlier than the present time stamp currently played; and
outputting subtitle data of the to-be-switched subtitle data having the time stamp matching the present time stamp currently played.

12. The subtitle switching method of claim 11, wherein, after receiving the instruction for switching subtitles inputted by users comprising:
determining whether the to-be-switched subtitle data is the subtitle data in present language;
if yes, continue outputting the present language subtitle data;
if no, obtain the to-be-switched subtitle data, stored in the preset buffer area and obtain a present time stamp of the audio and video data currently played.

13. The subtitle switching method of claim 11, wherein before outputting subtitle data of the to-be-switched subtitle data having the time stamp matching the present time stamp currently played comprising: decoding subtitle data of the to-be-switched subtitle data having the time stamp matching the present time stamp currently played.

14. A subtitle switching device comprising:
a demux module, for demultiplexing an audio and video file to obtain audio and video data and arrays of subtitle data corresponding the audio and video data;
a data cache module, for caching the audio and video data and arrays of subtitle data into a corresponding buffer area;
a decode module, for decoding the audio and video data and present language data in the arrays of subtitle data; and
an output module, configured for outputting and displaying the decoded audio and video data, and the decoded present language data synchronously;
a receiving module, configured for receiving the instructions inputted by users;
an obtaining module, configured for obtaining to-be-switched subtitle data, corresponding to the instruction, stored in the corresponding preset buffer area, and the present time stamp of the audio and video data currently played;
a remove module, for removing the subtitle data having the time stamp of the to-be-switched subtitle data earlier than the present time stamp of the audio and video data currently played;
an output module, for outputting and displaying subtitle data of the to-be-switched subtitle data having a time stamp matching the present time stamp currently played.

15. The subtitle switching device of claim 14, wherein, the device further comprises:
a determination module, for determining whether the to-be-switched subtitle data is the present language subtitle currently played; and
the output module, configured for outputting the present subtitle data currently played.

16. The subtitle switching device of claim 14, wherein the decoding module is configured for decoding subtitle data of the to-be-switched subtitle data having the time stamp matching the present time stamp currently played.

17. A subtitle switching method comprising the following steps:
demultiplexing an audio and video file to obtain the audio and video data and arrays of the subtitle data corresponding to the audio and video data;
caching the audio and video data and arrays of subtitle data into a corresponding preset buffer area;
decoding the audio and video data and present language data in the arrays of subtitle data;
outputting and displaying the decoded audio and video data and the decoded present language data synchronously;
receiving the instructions inputted by users;
obtaining the to-be-switched subtitle data, corresponding to the instruction, stored in the corresponding preset buffer area and the present time stamp of the audio and video data currently played;
decoding subtitle data of the to-be-switched subtitle data having the time stamp matching the present time stamp;
outputting and displaying the subtitle data of the to-be-switched subtitle data having the time stamp matching the present time stamp.

18. The subtitle switching method of claim 17, wherein after receiving the instructions inputted by users comprising:
determining whether the to-be-switched subtitle data is the present language subtitle data;
if yes, continue outputting the present language subtitle data;
if no, obtain the to-be-switched subtitle data, stored in the preset buffer area and obtain a present time stamp of the audio and video data currently played.

19. The subtitle switching method of claim 18, wherein after obtaining the to-be-switched subtitle data, corresponding to the instruction, stored in the corresponding preset buffer area and the present time stamp of the audio and video data currently played further comprising:
removing subtitle data of the to-be-switched subtitle data having the time stamp earlier than the present time stamp of the audio and video data currently played.

20. A subtitle switching method comprise:
receiving instructions inputted by users;
obtaining to-be-switched subtitle data, stored in a corresponding preset buffer area and corresponding to the instructions, and a present time stamp of the audio and video data currently played;
removing subtitle data of the to-be-switched subtitle data having the time stamp earlier than the present time stamp currently played;
decoding subtitle data of the to-be-switched subtitle data having the time stamp matching the present time stamp currently played;
outputting the subtitle data of the to-be-switched subtitle data having the time stamp matching the present time stamp currently played.
